# EUROPEAN PATENT SPECIFICATION

(11) **EP 2 458 831 B1**
(45) Date of publication and mention of the grant of the patent: **01.03.2017**
(21) Application number: 10192918.0
(22) Date of filing: 29.11.2010
(51) Int. Cl.: H04M 1/725

(54) **Communication system providing data transfer direction determination based upon motion and related methods**
Kommunikationssystem zur Bereitstellung der Datenübertragungsrichtungsbestimmung basierend auf Bewegung und zugehörige Verfahren
Système de communication fournissant une détermination de direction de transfert de données en fonction du mouvement et procédés associés

(43) Date of publication of application: 30.05.2012
(73) Proprietor: BlackBerry Limited, Waterloo, ON N2K 0A7 (CA)
(72) Inventor: Deluca, Michael Joseph, Rolling Meadows, IL 60008 (US)
(74) Representative: Roberts, Gwilym Vaughan

(56) References cited:
- US-A1- 2007 188 323
- US-A1- 2008 195 735

## Description

### Technical Field

This application relates generally to the field of communications, and more particularly, to electronic devices and related methods that use near-field communication (NFC).

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the Internet via a cellular network and/or a wireless local area network (WLAN), for example.

Some mobile devices incorporate contactless card technology and/or near field communication (NFC) chips. NFC technology is used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

US2008/0195735 discloses motion triggered data transfer. Methods of controlling the transfer of data between devices are described in which the manner of control is determined by a movement experienced by at least one of the devices. The method involves detecting a triggering movement and determining a characteristic of this movement. The transfer of data is then controlled based on the characteristic which has been identified.

Aspects of the invention are defined in the accompanying independent claims.

### Brief Description of the Drawings

FIG. 1 is a schematic block diagram of a communica ion system in accordance with one example aspect.
FIG. 2 is schematic block diagram of an alternative embodiment of the system of FIG. 1.
FIGS. 3 and 4 are acceleration vs. time graphs for the mobile wireless communications devices of FIG. 2.
FIGS. 5 and 6 are flow diagrams illustrating method aspects associated with the systems of FIGS. 1 and 2.
FIGS. 7 through 10 are front views of example mobi e wireless communications devices of the system of FIG. 2 illustrating various use cases.
FIGS, 11 and 12 are acceleration versus time graphs for the system of FIG. 1 illustrating various use cases when the electronic device is stationary or without motion sensing capabilities.
FIG. 13 is a schematic block diagram illustrating example components that may be used with the mobile wireless communications devices of FIGS. 1-2 and 7-10.

### Detailed Description

The present description is made with reference to the accompanying drawings, in which example embodiments are shown.

However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a communication system is disclosed herein which may include at least one electronic device configured to wirelessly communicate via a short-range communications format, and at least one mobile communications device. The at least one mobile communications device may include a short-range communications device configured to wirelessly communicate with the at least one electronic device via the short-range communications format, and a controller coupled to the short-range communications device. The controller may be configured to determine a state of movement of the at least one mobile communications device, and determine a direction of communication with respect to the at least one electronic device based upon the determined state of movement. As such, movement (or lack thereof) of the mobile communications device may advantageously be used to determine whether transmitting data (e.g., digital content data) to, receiving data from, or exchanging data with, the electronic device is appropriate.

More particularly, the at least one mobile communications device may further include an accelerometer coupled to the controller, and the controller may be further configured to determine the state of movement of the at least one mobile communications device based upon the accelerometer. The controller may also be configured to transmit digital content data to the at least one electronic device based upon determined movement of the at least one mobile communications device, and to receive digital content data from the at least one electronic device based upon no movement of the at least one mobile communications device.

In addition, the at least one mobile communications device may further include a portable housing carrying the short-range communications circuit and the controller, and the controller may be further configured to determine an impact to the portable housing and determine the direction of communication with respect to the at least one electronic device also based upon the determined impact to the portable housing. The controller may also be configured to determine a magnitude of movement of the at least one mobile communications device, and determine the direction of communication with respect to the at least one electronic device also based upon the determined magnitude of movement.

The at least one electronic device may be further configured to determine movement thereof, and the at least one electronic device and the controller may be configured to exchange digital content data therebetween based upon respective determined movement. By way of example, the short-range communications device may comprise a Near-Field Communication (NFC) device. Moreover, the mobile communications device may further include a wireless transceiver carried by the portable housing and configured to communicate via a wireless communications network.

A related mobile communications device, such as the one described briefly above, and a related communication method are also provided. The method may include determining a state of movement of the at least mobile communications device, and determining a direction of communication with respect to the at least one electronic device based upon the determined state of movement.

A computer-readable medium for a mobile communications device, such as the one described briefly above, is also provided. The non-transitory computer-readable medium may have computer executable instructions for causing the mobile communications device to perform steps comprising determining a state of movement of the mobile communications device, and determining a direction of communication with respect to the at least one electronic device based upon the determined state of movement.

By way of background, mobile communications devices (also referred to as "mobile devices" herein), such as portable cellular telephones, etc. are being equipped with short-range communications capabilities (e.g., NFC) to enable near field communication of information or data between mobile devices as well as other electronic devices (e.g., NFC tags, etc.). Data such as digital content data (e.g., electronic files, etc.) stored in the memory of one mobile device may be transmitted to another mobile device (or other electronic device, etc.) via NFC communications, or such data may be exchanged between the devices.

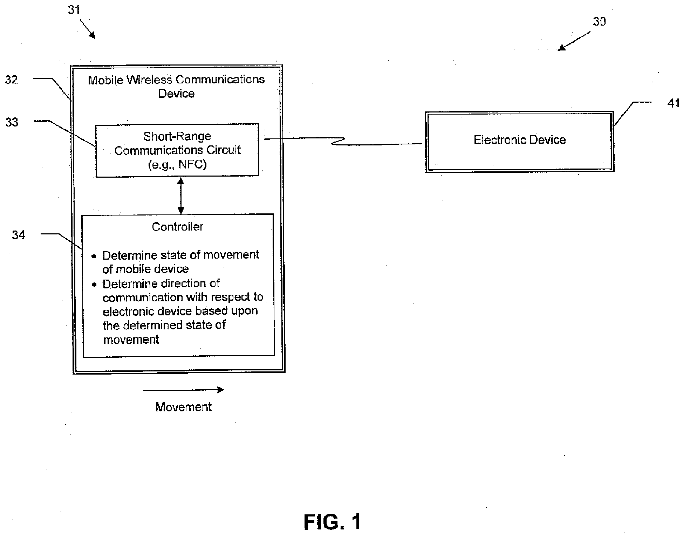

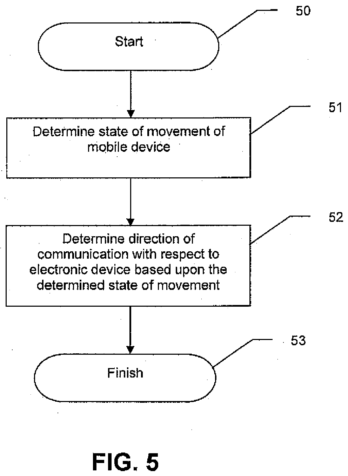

Referring initially to FIGS. 1 and 5, a communication system **30** illustratively includes an electronic device **41** which is configured to communicate via a short-range communications format (e.g., NFC). The system **30** further illustratively includes a mobile device **31** which includes a portable housing **32,** a short-range communication circuit **33** (e.g., an NFC circuit) carried by the portable housing and configured to communicate via the short-range communications format, and a controller **34** carried by the portable housing and coupled to the short-range communications circuit.

NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

By way of example, various mobile devices that may be used for the embodiments described herein include portable or personal media players (e.g., MP3 players, video players, etc.), remote controls (e.g., television or stereo remotes, etc.), portable gaming devices, portable or mobile telephones, smartphones, tablet computers, etc. Furthermore, the controller **34** may be implemented using a combination of hardware (e.g., microprocessor, etc.) and non-transitory computer-readable medium components having computer-executable instructions for performing the various operations described herein. Moreover, the electronic device **41** may also be a mobile device, although it may be stationary or otherwise intended not to be readily portable, such as a television, stereo, desktop computer, etc. In some embodiments, the electronic device may comprise an NFC tag (e.g., a poster tag, etc.), for example.

Beginning at Block **50,** the controller **34** may be configured to communicate with the electronic device **41** via the short-range communications (e.g., NFC) circuit **33** when in proximity therewith. The controller **34** is further configured to determine a state of movement of the mobile device **31,** at Block **51,** and to determine a direction of communication with respect to the electronic device **41** based upon the determined state of movement, at Block **52,** which concludes the method illustrated in FIG. 5 (Block **53**). As such, it may advantageously be determined if the mobile device **31** is attempting to transmit data (e.g., digital content data) to the electronic device **41,** receive data therefrom, or both (i.e., to exchange data therewith). In other words, by "direction of communication" it is meant which way digital content data is "flowing", i.e., from the mobile device **31** to the electronic device **41,** from the electronic device **41** to the mobile device **31,** or both. By way of example, the digital content data may include contacts (e.g., digital business cards), audio, video, images, addresses or appointments, documents, applications, financial information, security information, etc.

In the present example, the mobile device **31** is moving toward the electronic device **41** which is stationary. As such, the controller **34** determines that it should be transmitting data to the electronic device **41** due to the movement of the mobile device **31.** On the other hand, if the controller **34b** determines that the mobile device is not moving prior to the portable housing **32** being bumped with the electronic device **41** or at the point where NFC communication otherwise commences due to close proximity, then the controller **34** determines that it is to receive digital content data from the electronic device **41.** However, it should be noted that this order may be reversed in some embodiments (i.e., movement signifies data is to be received, and no movement signifies that digital content data is to be transmitted). In some example embodiments, movement of the mobile device **31** toward the electronic device **41** signifies that data is to be transmitted by the mobile device **31,** and movement of the mobile device **31** away from the electronic device **41** signifies that data is to be received by the mobile device **31.**

Pre-selection of data qualified to transmit via NFC communications may be a precondition of data exchange in some embodiments. For example, a business card (e.g., a personal address book contact) for the mobile device **31** owner may be pre-selected as enabled for communication via NFC, while the remainder of the address book would not be pre-selected or designated for communication. In this way, the business card may be a "default" file that is automatically transferred to a different mobile device upon movement of a given mobile device to initiate NFC communications.

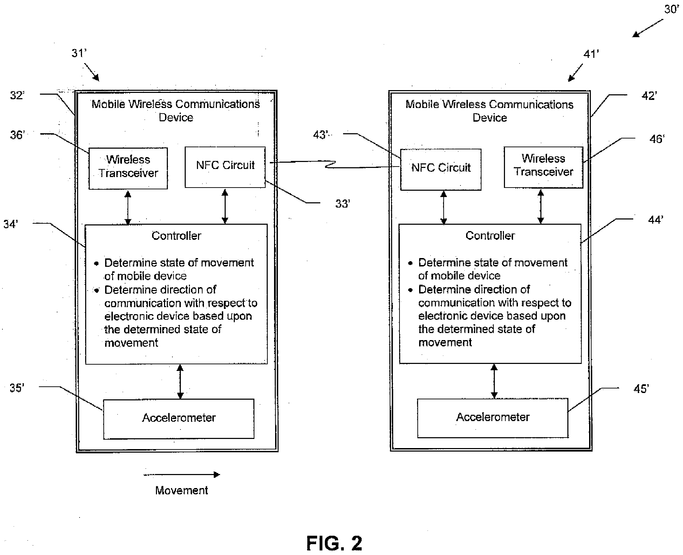

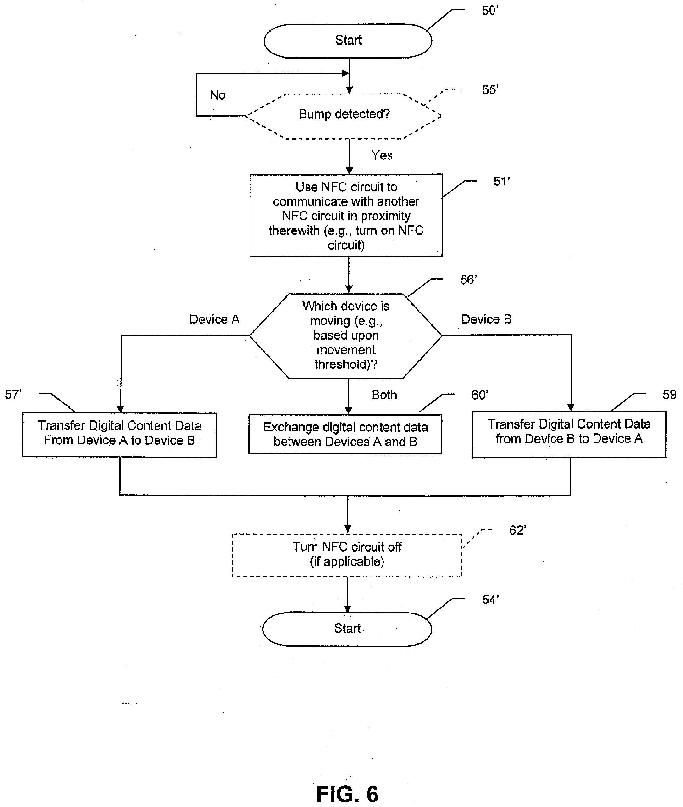

Referring additionally to FIGS. 2-4 and 6, in this example the electronic device **41'** is also a mobile device similar to the mobile device **31'.** Here both of the mobile devices **31', 41'** have NFC short-range communication circuits **33', 43'** and further include an accelerometer **35', 45'** carried by their portable housings **32', 42'** and coupled to their controllers **34', 44',** respectively. As such, the controllers **34', 44'** may advantageously use the accelerometers **35', 45'** to determine the respective states of movement of the mobile devices **31', 41'.**

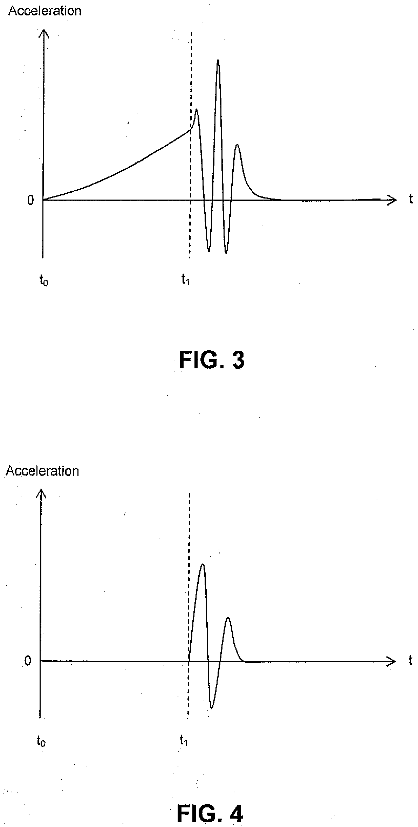

Acceleration graphs of the mobile devices **31', 41'** are shown in FIGS. 3 and 4, respectively. It should be noted that the example acceleration graphs provided herein are schematic in nature and provided for reference purposes, but are not graphs of actual accelerometer measurement data. In the present example, the mobile device **31'** is moved or accelerated beginning at time to until it collides with or bumps the mobile device **41'** at time t₁. That is, the bump is physical contact between the portable housings **32', 42'.** As such, the acceleration curve for the mobile device **31'** ramps up between times t₀ and t₁, while the acceleration curve for the mobile device **41'** between these times is relatively horizontal or flat. A threshold may be used to determine whether movement has occurred, such as whether the slope of the acceleration curve exceeds a threshold level. Thus, little or slight movement may be considered as not moving, for example.

It should be noted that in some embodiments movement of a mobile device may be determined or detected by a component other than an accelerometer. For example, this may be done based upon movement detected from an optical sensor (e.g., a charge-coupled device (CCD)), gyroscope, compass, etc.

Upon detection of the bump, at Block **55',** the NFC circuits **33', 43'** may begin communicating (e.g., they may be turned on or otherwise enabled for communication), at Block **51',** and the controllers **34', 44'** may advantageously determine whether their respective mobile devices **31', 41'** were moving prior to or at the time of the bump based upon the ramp or slope of the acceleration curve, at Block **56'.** In the case where the NFC circuits **33', 43'** are powered on or awakened from a sleep mode by the physical contact of the mobile devices **31', 41',** then these circuits may optionally be turned off or returned to a power-saving or sleep mode once NFC communications are complete, at Block **62'.**

It should be noted, however, that a bump or physical contact of the mobile devices **31', 41'** is not required in all embodiments. That is, the mobile devices **31', 41'** need not actually physically contact in all embodiments for NFC (or other short-range) communications to take place. As such, the triggering event for when to check for movement may be when NFC communications are first initiated (i.e., the NFC circuits **33', 43'** first come in range and begin communicating with one another), for example. For instance, one or both of the NFC circuits **33', 43'** may be operating in an active NFC mode and powered on prior to coming in proximity with each other, which will result in the detection of one another and commencement of NFC communication.

In the case where the mobile device **31'** was in motion prior to the bump but the mobile device **41'** was not, the controller **34'** conveys its digital content data to the controller **44'** via the NFC circuit **33', 43',** at Blocks **56', 57'.** In the opposite case, i.e., where the mobile device **31'** was not in motion prior to the bump but the mobile device **41'** was in motion, then the controller **44'** conveys its digital content data to the controller **34'** via the NFC circuits **33', 43',** at Block **59'.**

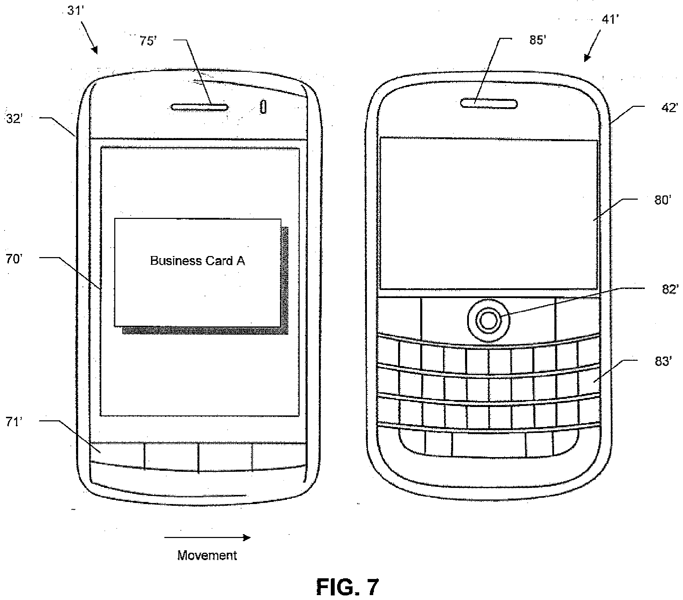

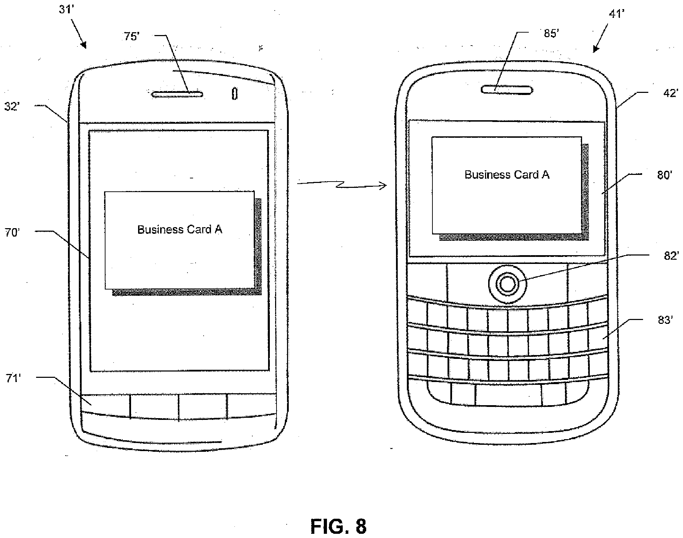

By way of example, in FIG. 7 the mobile device **31'** is shown moving toward a mobile device **41'.** In this example embodiment, the mobile device **31'** further includes a touch screen display **70',** input buttons **71',** and an audio output transducer **75',** all of which are carried by the housing **32'** and coupled to the controller **34'.** Moreover, the mobile device **41'** illustratively includes a display **80',** a track ball **82'** and a keypad **83'** (which serve as input devices), and an audio output transducer **85',** all of which are carried by the housing **42'** and coupled to the controller **44'.** In the example of FIG. 7, the mobile device **31'** is initially displaying a contact "business card" ("Business Card A") on the display **70'** prior to contact with the stationary mobile device **41'.** That is, displaying a digital content item (e.g., contact, image, etc.) on the display may designate that item for transfer upon movement of the mobile device **31'** into contact with the mobile device **41',** although in other embodiments content may be pre-selected for transfer via other approaches, as discussed above. Once the bump occurs, the controller **34'** transmits the business card to the controller **44',** as seen in FIG. 8. This transfer may be accomplished by the NFC circuits **33', 43',** or in some embodiments the transfer may be performed via a separate communications path, such as via the wireless transceivers **36', 46'** (e.g., Bluetooth, etc.).

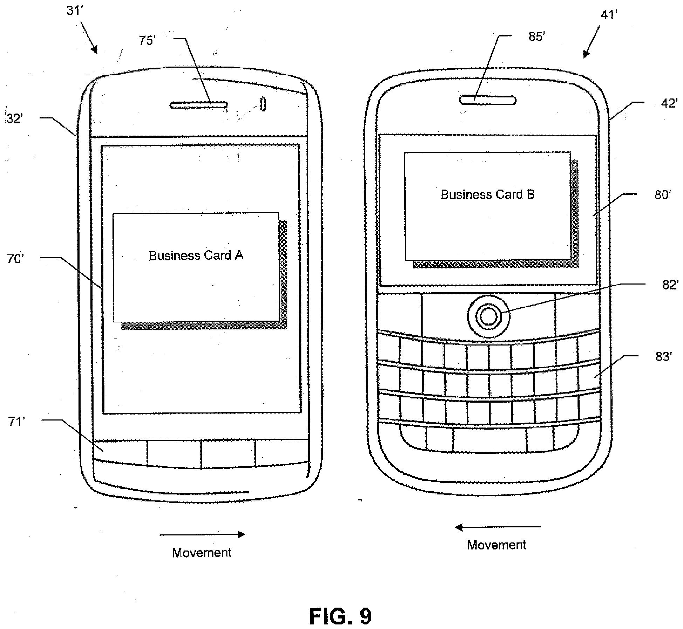

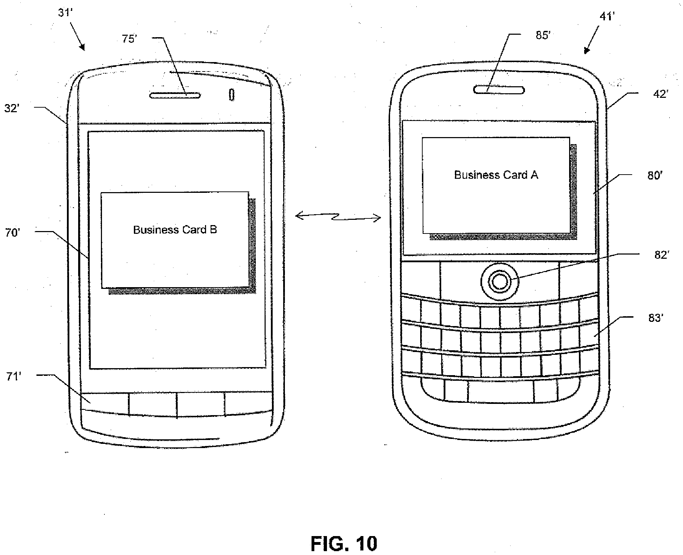

In the case where both mobile devices **31', 41'** were in motion just prior to the bump (i.e., they bumped each other), then the controllers **33', 43'** exchange respective digital content data, at Block **60'.** An example implementation of this case is shown in FIGS. 9 and 10. As seen in FIG. 9, each of the mobile devices **31', 41'** is displaying a business card ("Business Card A", "Business Card B") on its respective display **70', 80'** and are moving toward one another. After the bump occurs, the digital business cards are exchanged between the mobile devices **31', 41',** as seen in FIG. 10.

In the examples of FIGS. 7-10, both of the mobile devices **31', 41'** have motion detection capabilities (i.e., the accelerometers **35', 45'**). However, referring again to FIG. 1, in some embodiments the electronic device **41** may be stationary or not have motion detection capabilities. For example, the electronic device **41** may be a personal computer, etc., with NFC capabilities (e.g., an NFC peripheral) but no motion detection capabilities. Yet, it may still be desirable to utilize the motion of the mobile device **31** to not only transmit digital content data to the electronic device **41,** but also to receive digital content data therefrom (or exchange digital content data therewith). These different operations may be invoked by using a given series of movements or bumps to signify a respective data transfer operation.

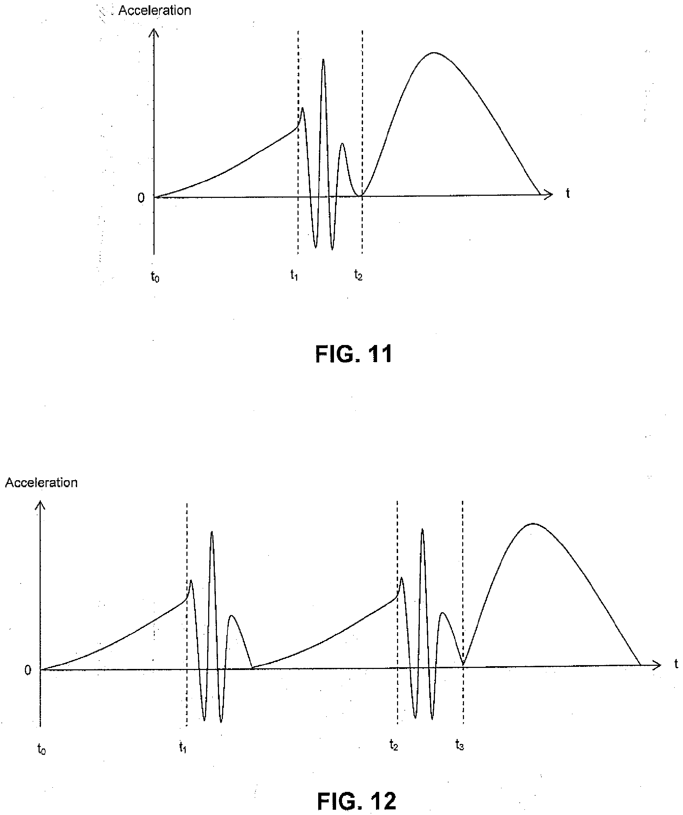

For example, movement followed by a bump and then a stop (no movement or acceleration), i.e., a "bump-stop" sequence, as shown in FIG. 3, may be used to indicate that digital content is to be transferred to the electronic device **41.** Note that when implementing the "bump-stop" mode, the motion detection for device **31** may be determined by detection of a sound associated with a bump resulting from the motion, by monitoring a microphone or other transducer coupled to device **31,** thereby eliminating the necessity of accelerometer determined motion. To receive digital content data from the electronic device **41,** the mobile device **31** may be moved until a bump occurs, and then "pulled back" from the electronic device (a "bump-pull back" sequence), as shown in FIG. 11. Here, the pull back occurs at time t₂, and is indicated by acceleration of a greater magnitude (i.e., a greater slope on the acceleration graph) than the acceleration preceding the bump. That is, the magnitude of the movement or acceleration may be used to signify which digital (data content) transfer operation (and, therefore, direction) is to be used. Another example sequence that may be used to indicate that digital content data is to be received or transferred from the electronic device **41** to the mobile device **31** is a "bump-bump-stop" sequence. Note that when implementing the "bump-bump-stop" mode, the motion detection for device **31** may be resulting from the motion, by monitoring a microphone or other transducer coupled to device **31** thereby eliminating the necessity of accelerometer determined motion.

An example sequence which may be used to indicate an exchange of digital content data between the mobile device **31** and the electronic device **41** is shown in FIG. 12. In particular, this is a "bump-bump-pull back" sequence. It will be appreciated, however, that the foregoing sequences are merely provided by way of example, and that the various sequences could be assigned to different operations in different embodiments, or that other similar sequences may also be used.

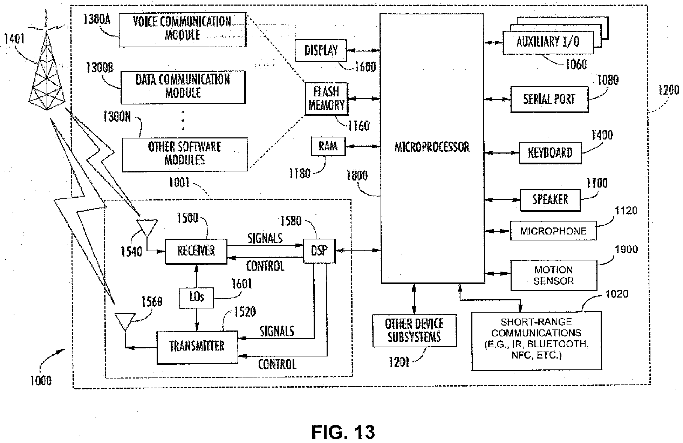

Example components of a mobile wireless communications device **1000** that may be used in accordance with the above-described embodiments are further described below with reference to FIG. 13. The device **1000** illustratively includes a housing **1200,** a keypad or keyboard **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 13. These include a communications subsystem **1001;** a short-range communications subsystem **1020;** the keypad **1400** and the display **1600,** along with other input/output devices **1060, 1080, 1100, 1120** and **1900;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem **1020** may include an infrared device and associated circuits and components, or a Bluetooth™ or NFC communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile communications device (31) comprising:
a short-range communications device (33) being configured to wirelessly communicate with at least one electronic device (41) via a short-range communications format; and
a controller (34) coupled to said short-range communications device, the controller being configured to
determine a given bump-pull back sequence of movements of the mobile communications device, signifying a respective data transfer operation, and
determine which way data is to flew with respect to the at least one electronic device based upon the signified data transfer operation.

2. The mobile communications device(31') of Claim 1 further comprising a movement detection sensor (35') coupled to said controller (34); and wherein said controller is further configured to determine the given bump-pull back sequence of movements of the mobile communications device based upon said movement detection sensor.

3. The mobile communication device (31) of claim 1 for use in a communication system (30) comprising:
at least one electronic device (41) configured to wirelessly communicate via a short-range communications format with the mobile communication device (31).

4. The mobile communication device (31) of claim 1 wherein said controller is configured to transmis digital content data to said at least one electronic device (41) based upon the signified data transfer operation.

5. The mobile communication device (31) of Claim 1 wherein said controller (34) is configured to receive digital content data from said at least one electronic device (41) based upon substantially no movement of said at least one mobile communications device (31).

6. The mobile communication device (31) of Claim 1 wherein said controller (34) is configured to receive digital content data from said at least one electronic device (41) based upon being moved away therefrom.

7. The mobile communication device (31) of Claim 1 further comprising a housing (32) carrying said short-range communications device and said controller (34); and wherein said controller is further configured to determine an impact to said housing, and determine which way data is to flow with respect to said at least one electronic device (41) based upon the determined impact to said housing.

8. The mobile communication device (31) of Claim 1 wherein said controller (34) is configured to determine a magnitude of movement of said at least one mobile communications device (31), and determine which way data is to flow with respect to said at least one electronic device (41) based upon the determined magnitude of movement.

9. The mobile communication device (31) of Claim 1 wherein said at least one electronic device (41) is further configured to determine movement thereof; and wherein said at least one electronic device (41) and said controller (34) are configured to exchange digital content data therebetween based upon respective determined movement.

10. The mobile communication device (31) of Claim 1 wherein said short-range communications device (33) comprises a Near-Field Communication (NFC) device.

11. A communication method for at least one electronic device (41) configured to wirelessly communicate via a short-range communications format, and at least one mobile communications device (31) comprising a short-range communications device (33) configured to wirelessly communicate with the at least one electronic device via the short-range communications format, the method comprising:
determining a given bump-pull back sequence of movements of the at least one mobile communications device; and
determining which way data is to flow with respect to the at least one electronic device based upon the signified data transfer operation.

12. The communication method of Claim 11 wherein the at least one mobile communications device (31') further comprises a movement detection sensor (35') coupled to the controller (34); and wherein determining the given bump-pull back sequence of movements comprises determining the given bump-pull back sequence of movements of the at least one mobile communications device based upon the movement detection sensor.

## Patentansprüche

1. Eine mobile Kommunikationsvorrichtung (31), die aufweist:
eine Nahbereichs-Kommunikationsvorrichtung (33), die konfiguriert ist zum drahtlosen Kommunizieren mit zumindest einer elektronischen Vorrichtung (41) über ein Nahbereichs-Kommunikationsformat; und
eine Steuervorrichtung (34), die mit der Nahbereichs-Kommunikationsvorrichtung gekoppelt ist, wobei die Steuervorrichtung konfiguriert ist zum
Bestimmen einer gegebenen Anstoßen-Wegziehen-Sequenz von Bewegungen der mobilen Kommunikationsvorrichtung, was eine jeweilige Datenübertragungsoperation bezeichnet, und
Bestimmen, in welche Richtung in Bezug auf die zumindest eine elektronische Vorrichtung Daten fließen sollen basierend auf der bezeichneten Datenübertragungsoperation.

2. Die mobile Kommunikationsvorrichtung (31') gemäß Anspruch 1, die weiter einen Bewegungserfassungssensor (35') aufweist, der mit der Steuervorrichtung (34) gekoppelt ist; und wobei die Steuervorrichtung weiter konfiguriert ist zum Bestimmen der gegebenen Anstoßen-Wegziehen-Sequenz von Bewegungen der mobilen Kommunikationsvorrichtung basierend auf dem Bewegungserfassungssensor.

3. Die mobile Kommunikationsvorrichtung (31) gemäß Anspruch 1 zur Verwendung in einem Kommunikationssystem (30), das aufweist:
zumindest eine elektronische Vorrichtung (41), die konfiguriert ist zum drahtlosen Kommunizieren über ein Nahbereichs-Kommunikationsformat mit der mobilen Kommunikationsvorrichtung (31).

4. Die mobile Kommunikationsvorrichtung (31) gemäß Anspruch 1, wobei die Steuervorrichtung konfiguriert ist zum Übertragen von digitalen Inhaltsdaten an die zumindest eine elektronische Vorrichtung (41) basierend auf der bezeichneten Datenübertragungsoperation.

5. Die mobile Kommunikationsvorrichtung (31) gemäß Anspruch 1, wobei die Steuervorrichtung (34) konfiguriert ist zum Empfangen von digitalen Inhaltsdaten von der zumindest einen elektronischen Vorrichtung (41) basierend auf im Wesentlichen keiner Bewegung der zumindest einen mobilen Kommunikationsvorrichtung (31).

6. Die mobile Kommunikationsvorrichtung (31) gemäß Anspruch 1, wobei die Steuervorrichtung (34) konfiguriert ist zum Empfangen von digitalen Inhaltsdaten von der zumindest einen elektronischen Vorrichtung (41) basierend auf einer Bewegung weg von dieser.

7. Die mobile Kommunikationsvorrichtung (31) gemäß Anspruch 1, die weiter ein Gehäuse (32) aufweist, das die Nahbereichs-Kommunikationsvorrichtung und die Steuervorrichtung (34) trägt; und wobei die Steuervorrichtung weiter konfiguriert ist zum Bestimmen eines Anstoßes an das Gehäuse und zum Bestimmen, in welche Richtung in Bezug auf die zumindest eine elektronische Vorrichtung (1) Daten fließen sollen basierend auf dem bestimmten Anstoß an das Gehäuse.

8. Die mobile Kommunikationsvorrichtung (31) gemäß Anspruch 1, wobei die Steuervorrichtung (34) konfiguriert ist zum Bestimmen eines Umfangs einer Bewegung der zumindest einen mobilen Kommunikationsvorrichtung (31) und zum Bestimmen, in welche Richtung in Bezug auf die zumindest eine elektronische Vorrichtung (1) Daten fließen sollen basierend auf dem bestimmten Umfang der Bewegung.

9. Die mobile Kommunikationsvorrichtung (31) gemäß Anspruch 1, wobei die zumindest eine elektronische Vorrichtung (41) weiter konfiguriert ist zum Bestimmen derer Bewegung; und wobei die zumindest eine elektronische Vorrichtung (41) und die Steuervorrichtung (34) konfiguriert sind zum Austauschen von digitalen Inhaltsdaten zwischen ihnen basierend auf der jeweiligen bestimmten Bewegung.

10. Die mobile Kommunikationsvorrichtung (31) gemäß Anspruch 1, wobei die Nahbereichs-Kommunikationsvorrichtung (33) eine NFC(Near-Field Communication)-Vorrichtung aufweist.

11. Ein Kommunikationsverfahren für zumindest eine elektronische Vorrichtung (41), die konfiguriert ist zum drahtlosen Kommunizieren über ein Nahbereichs-Kommunikationsformat, und zumindest eine mobile Kommunikationsvorrichtung (31), die eine Nahbereichs-Kommunikationsvorrichtung (33) aufweist, die konfiguriert ist zum drahtlosen Kommunizieren mit der zumindest einen elektronischen Vorrichtung über das Nahbereichs-Kommunikationsformat, wobei das Verfahren aufweist:
Bestimmen einer gegebenen Anstoßen-Wegziehen-Sequenz von Bewegungen der zumindest einen mobilen Kommunikationsvorrichtung; und
Bestimmen, in welche Richtung in Bezug auf die zumindest eine elektronische Vorrichtung Daten fließen sollen basierend auf der bezeichneten Datenübertragungsoperation.

12. Das Kommunikationsverfahren gemäß Anspruch 11, wobei die zumindest eine mobile Kommunikationsvorrichtung (31') weiter einen Bewegungserfassungssensor (35') aufweist, der mit der Steuervorrichtung (34) gekoppelt ist; und wobei das Bestimmen der gegebenen Anstoßen-Wegziehen-Sequenz von Bewegungen aufweist ein Bestimmen der gegebenen Anstoßen-Wegziehen-Sequenz von Bewegungen der zumindest einen mobilen Kommunikationsvorrichtung basierend auf dem Bewegungserfassungssensor.

## Revendications

1. Dispositif de communication mobile (31) comprenant :
un dispositif de communication à courte portée (33) configuré pour communiquer par sans fil avec au moins un dispositif électronique (41), dans un format de communication à courte portée ; et
un contrôleur (34) couplé audit dispositif de communication à courte portée, le contrôleur étant configuré pour :
déterminer une séquence donnée de mouvements de contact et de retrait par le dispositif de communication mobile, qui signifie une opération respective de transfert de données ; et
déterminer la direction que doivent suivre les données par rapport audit au moins un dispositif électronique, en fonction de l'opération de transfert de données ainsi signifiée.

2. Dispositif de communication mobile (31') selon la revendication 1, comprenant en outre un capteur de détection du mouvement (35') couplé audit contrôleur (34) et dans lequel ledit contrôleur est en outre configuré pour déterminer la séquence donnée de mouvements de contact et de retrait par le dispositif de communication mobile en fonction dudit capteur de détection du mouvement.

3. Dispositif de communication mobile (31) selon la revendication 1, destiné à être utilisé dans un système de communication (30) comprenant :
au moins un dispositif électronique (41) configuré pour communiquer par sans fil dans un format de communication à courte portée avec le dispositif de communication mobile (31).

4. Dispositif de communication mobile (31) selon la revendication 1, dans lequel ledit contrôleur est configuré pour émettre des données numériques de contenu vers ledit au moins un dispositif électronique (41), en fonction de l'opération de transfert de données ainsi signifiée.

5. Dispositif de communication mobile (31) selon la revendication 1, dans lequel ledit contrôleur (34) est configuré pour recevoir des données numériques de contenu en provenance dudit au moins un dispositif électronique (41), du fait de l'absence substantielle de mouvement de la part dudit au moins un dispositif de communication mobile (31) .

6. Dispositif de communication mobile (31) selon la revendication 1, dans lequel ledit contrôleur (34) est configuré pour recevoir des données numériques de contenu en provenance dudit au moins un dispositif électronique (41), du fait d'un mouvement d'éloignement de celui-ci.

7. Dispositif de communication mobile (31) selon la revendication 1, comprenant en outre un boîtier (32) portant ledit dispositif de communication à courte portée et ledit contrôleur (34) et dans lequel ledit contrôleur est en outre configuré pour déterminer un impact sur ledit boîtier et pour déterminer dans quelle direction les données doivent circuler par rapport audit au moins un dispositif électronique (41), en fonction de l'impact identifié sur ledit boîtier.

8. Dispositif de communication mobile (31) selon la revendication 1, dans lequel ledit contrôleur (34) est configuré pour déterminer une amplitude du mouvement dudit au moins un dispositif de communication mobile (31) et pour déterminer dans quelle direction les données doivent circuler par rapport audit au moins un dispositif électronique (41), en fonction de l'amplitude du mouvement ainsi déterminée.

9. Dispositif de communication mobile (31) selon la revendication 1, dans lequel ledit au moins un dispositif électronique (41) est en outre configuré pour déterminer le mouvement de celui-ci et dans lequel ledit au moins un dispositif électronique (41) et ledit contrôleur (34) sont configurés pour échanger des données numériques de contenu entre eux en fonction des mouvements respectifs déterminés.

10. Dispositif de communication mobile (31) selon la revendication 1, dans lequel ledit dispositif de communication à courte portée (33) consiste en un dispositif de communication en champ proche.

11. Procédé de communication pour au moins un dispositif électronique (41) configuré pour communiquer par sans fil dans un format de communication à courte portée et au moins un dispositif de communication mobile (31) comprenant un dispositif de communication à courte portée (33) configuré pour communiquer par sans fil avec ledit au moins un dispositif électronique dans le format de communication à courte portée, le procédé comprenant les étapes consistant à :
déterminer une séquence donnée de mouvements de contact et de retrait par le dispositif de communication mobile, qui signifie une opération respective de transfert de données ; et
déterminer la direction que doivent suivre les données par rapport audit au moins un dispositif électronique, en fonction de l'opération de transfert de données ainsi signifiée.

12. Procédé selon la revendication 11, dans lequel ledit au moins un dispositif de communication mobile (31') comprend en outre un capteur de détection du mouvement (35') couplé audit contrôleur (34) et dans lequel l'étape de détermination de la séquence donnée de mouvements de contact et de retrait comprend l'étape consistant à déterminer la séquence donnée de mouvements de contact et de retrait par ledit au moins un dispositif de communication mobile en fonction dudit capteur de détection du mouvement.
